# EUROPÄISCHE PATENTANMELDUNG

(11) **EP 3 974 660 A1**
(43) Veröffentlichungstag der Anmeldung: **30.03.2022**
(21) Anmeldenummer: 21195465.6
(22) Anmeldetag: 08.09.2021
(51) Int. Cl.: F16B 5/04, F16B 19/06, F16B 19/10, B21J 15/02, F16B 31/00

(54) **SELBSTSTANZENDES BEFESTIGUNGSELEMENT**

(30) Priorität: 29.09.2020 DE 102020125460
(71) Anmelder: Profil Verbindungstechnik GmbH & Co. KG, 61381 Friedrichsdorf (DE)
(72) Erfinder: JENE, Tobias, 61381 Friedrichsdorf (DE); MAHLME, Amer, 61352 Bad Homburg (DE)
(74) Vertreter: Manitz Finsterwald Patent- und Rechtsanwaltspartnerschaft mbB

(57) **Zusammenfassung**

Die Erfindung betrifft ein selbststanzendes Befestigungselement zur Verbindung eines ersten Werkstücks mit einem zweiten Werkstück, insbesondere wobei die Werkstücke Blechteile sind. Das Befestigungselement umfasst einen Ringabschnitt, der eine Öffnung des Befestigungselements in Umfangsrichtung umgibt und der eine Werkstückanlagefläche, die radial außenseitig von einer Stanzkante begrenzt ist, aufweist und einen mit dem Ringabschnitt mittels eines Koppelabschnitts verbundenen und mit der Öffnung koaxial angeordneten Schaftabschnitt, der sich von der der Werkstückanlagefläche abgewandten Seite des Ringabschnitts erstreckt und der eine Außenkontur aufweist, die komplementär zu einer Innenkontur der Öffnung ausgestaltet ist, so dass der Schaftabschnitt nach einer Trennung der Verbindung mit dem Ringabschnitt zumindest teilweise durch die Öffnung führbar ist. Weiterhin betrifft die Erfindung ein Zusammenbauteil, umfassend ein selbststanzendes Befestigungselement sowie ein erstes und gegebenenfalls ein zweites Werkstück und ein Verfahren zur Herstellung des Zusammenbauteils.

## Beschreibung

Die Erfindung betrifft ein selbststanzendes Befestigungselement zur Verbindung eines ersten Werkstücks mit einem zweiten Werkstück, insbesondere wobei die Werkstücke Blechteile sind. Grundsätzlich können das erste und/oder das zweite Werkstück auch Kunststoffteile sein.

Derartige Befestigungselemente sind grundsätzlich bekannt und finden weitreichende Verwendung, beispielsweise im Automobilbau. Gerade bei der Verbindung hochfester Blechteile untereinander oder bei der Verbindung hochfester Blechteile mit Blechteilen geringerer Festigkeit ist der technische Aufwand jedoch groß. Insbesondere müssen zur Herstellung solcher Verbindungen hohe Verarbeitungskräfte aufgebracht werden, woraus eine hohe Beanspruchung des verwendeten Werkzeugs sowie der zu verbindenden Werkstücke entsteht. Eine reduzierte Werkzeuglebensdauer und eine strukturelle Beeinträchtigung der Werkstücke kann die Folge sein. Zudem kann der Einsatz eines Befestigungselements mit Sondereigenschaften erforderlich sein, beispielsweise kann die Verwendung hochfester Werkstoffe für das Befestigungselement erforderlich sein, was die Herstellung des Befestigungselements erschwert und verteuert.

Der vorliegenden Erfindung liegt die Aufgabe zugrunde, ein Befestigungselement zur zuverlässigen Verbindung insbesondere hochfester Werkstücke zu schaffen, insbesondere auch mit Werkstücken geringerer Festigkeit, welches sich durch eine kostengünstige Herstellung auszeichnet.

Die Aufgabe wird gelöst durch ein selbststanzendes Befestigungselement mit den Merkmalen des Anspruchs 1.

Konkret sieht die Erfindung ein selbststanzendes Befestigungselement zur Verbindung eines ersten Werkstücks mit einem zweiten Werkstück vor, insbesondere wobei die Werkstücke Blechteile sind. Das erfindungsgemäße Befestigungselement umfasst einen Ringabschnitt, der eine Öffnung des Befestigungselements in Umfangsrichtung umgibt und der eine Werkstückanlagefläche, die radial außenseitig von einer Stanzkante begrenzt ist, und eine Angriffsfläche für eine erste Setzeinrichtung aufweist, die an der der Werkstückanlagefläche abgewandten Seite des Ringabschnitts angeordnet ist. Ferner umfasst das Befestigungselement einen mit dem Ringabschnitt mittels eines Koppelabschnitts verbundenen und mit der Öffnung koaxial angeordneten Schaftabschnitt, der sich von der der Werkstückanlagefläche abgewandten Seite des Ringabschnitts erstreckt und der eine Außenkontur aufweist, die komplementär zu einer Innenkontur der Öffnung ausgestaltet ist, so dass der Schaftabschnitt nach einer Trennung der Verbindung mit dem Ringabschnitt zumindest teilweise durch die Öffnung führbar ist, wobei eine axiale Erstreckung des Schaftabschnitts größer ist als eine axiale Erstreckung des Ringabschnitts.

Das erfindungsgemäße Befestigungselements umfasst also zur Verbindung zweier Werkstücke zwei Abschnitte, d.h. gewissermaßen zwei Befestigungskomponenten, die in einer Längsrichtung des Befestigungselements aneinander angrenzen und die in einem zweistufigen Befestigungsprozess sukzessive an dem ersten und dem zweiten Werkstück befestigbar sind. Das erfindungsgemäße Befestigungselement kann beispielsweise während eines Presshärteverfahrens oder während eines Warmumformungsverfahrens an einem ersten Werkstück befestigt werden. Im Anschluss kann ein zweites Werkstück, beispielsweise aus einem Blechwerkstoff oder einem Kunststoffwerkstoff, mittels eines zweiten Verbindungsverfahrens daran befestigt werden, insbesondere ohne eine Erwärmung.

Das Befestigungselement kann zur Verbindung von aus einem beliebigen Material gefertigten Werkstücken eingesetzt werden, wobei vorteilhafterweise zumindest eines der Werkstücke ein Metallteil ist, beispielsweise ein Blechteil. Bevorzugt sind beide Werkstücke Metallteile, wobei das erste Werkstück und das zweite Werkstück aus dem gleichen Material, insbesondere Metall, oder aus verschiedenen Materialien, insbesondere verschiedenen Metallen, gefertigt sein können. Zumindest eines der Werkstücke kann aus einem hochfesten Material, beispielsweise Metall, gefertigt sein und eine Festigkeit von größer als 600 MPa aufweisen, insbesondere größer als 1200 MPa und bis zu 2000 MPa, insbesondere sogar größer als 2000 MPa. Beispielsweise kann zumindest eines der Werkstücke ein hochfestes Stahlteil sein. Zumindest eines der Werkstücke kann auch ein Aluminiumbauteil sein. Somit eignet sich das erfindungsgemäße Befestigungselement besonders flexibel für Leichtbau- sowie Mischbauweisen und kann eingesetzt werden, um Werkstücke mit verschiedenen Materialeigenschaften, insbesondere mit verschiedenen Festigkeiten, einfach und zuverlässig zu verbinden, sodass sich eine große Flexibilität und Bandbreite hinsichtlich der Einsetzbarkeit des Befestigungselements ergeben. Insbesondere ist die Verbindung unabhängig von der Endfestigkeit der verwendeten Werkstücke.

Das Befestigungselement selbst kann ebenfalls aus einem beliebigen Material gefertigt sein, bevorzugt aus einem Metall. Eine Fertigung des Befestigungselements aus hochfestem Metall ist jedoch, auch beim Einsetzen in hochfesten Blechen, nicht zwingend erforderlich. Eine spezielle Wärmebehandlung oder spezielle Beschichtung zur Härtung des Befestigungselements ist in der Regel ebenfalls nicht unbedingt erforderlich und das Risiko einer Wasserstoffversprödung des Befestigungselements kann vermieden werden, während eine einfache und kostengünstige Herstellung möglich ist.

Der Ringabschnitt umfasst eine sich in axialer Richtung entlang der Längsrichtung des Befestigungselements erstreckende Öffnung. Die Öffnung kann beispielsweise einen runden, alternativ auch einen ovalen, elliptischen oder polygonalen Querschnitt aufweisen. Die Werkstückanlagefläche erstreckt sich in radialer Richtung des Befestigungselements und ist an einem dem Schaftabschnitt abgewandten axialen Ende des Befestigungselements angeordnet. Die die Werkstückanlagefläche umgebende Stanzkante ist dazu ausgebildet, dass sie während des Einbringens des Befestigungselements in das erste Werkstück ein Loch zur Aufnahme des Ringabschnitts in das Werkstück stanzt. Ein Vorlochen des ersten Werkstücks ist somit nicht erforderlich.

Der Schaftabschnitt schließt sich in axialer Richtung an den Ringabschnitt an und ist in einem Vormontagezustand des Befestigungselements mittels des Koppelabschnitts mit dem Ringabschnitt verbunden. Nach einem Abtrennen des Schaftabschnitts von dem Ringabschnitt ist ersterer entlang der Längsachse des Befestigungselements bewegbar und kann so durch die Öffnung geführt werden. Zu diesem Zweck ist ein Querschnitt des Schaftabschnitts mit einem Querschnitt der Öffnung korrespondierend ausgebildet. Beispielsweise können die Querschnittsflächen zumindest im Wesentlichen gleich sein, wobei der Querschnitt des Schaftabschnitts beispielsweise geringfügig kleiner sein kann.

Der Schaftabschnitt kann in dem Vormontagezustand an einem dem Ringabschnitt abgewandten Endbereich eine zweite Angriffsfläche für eine zweite Setzeinrichtung aufweisen, welche zur Lösung der Kopplung des Schaftabschnitts und des Ringabschnitts dient.

Denkbar ist, dass der Schaftabschnitt eine zweite Stanzkante aufweist, insbesondere welche den Schaftabschnitt im Bereich des Koppelabschnitts außenseitig begrenzt. Die zweite Stanzkante kann dazu vorgesehen sein, ein Loch zur Aufnahme des Schaftabschnitts in ein Werkstück, insbesondere das zweite Werkstück zu stanzen.

Ein flexibler Einsatz des Befestigungselements ist für Werkstücke mit verschiedenen Blechdicken möglich. Zu beachten ist, dass die Dicke des ersten Werkstücks nicht die Länge des Schaftabschnitts überschreiten sollte, damit ein Durchtreten des Schaftabschnitts bis in oder durch das zweite Werkstück möglich bleibt.

Vorteilhafte Ausbildungen der Erfindung sind den Unteransprüchen, der Beschreibung und der Zeichnung zu entnehmen.

Gemäß einer Ausführungsform sind die Werkstückanlagefläche und/oder die Angriffsfläche ringförmig und/oder eine Grundform einer Außenkontur des Ringabschnitts im Wesentlichen kreisförmig. Die Werkstückanlagefläche und die Angriffsfläche können parallel zueinander orientiert sein. Das Befestigungselement kann rotationssymmetrisch bezüglich seiner Längsachse ausgebildet sein, wodurch es besonders einfach und günstig herstellbar sowie einsetzbar ist, da das Befestigungselement selbst und/oder die erste Setzeinrichtung bezüglich der Längsachse unter einem beliebigen Drehwinkel eingesetzt werden können.

Alternativ kann der Ringabschnitt eine Außenkontur aufweisen, die von der Kreis- bzw. Ringform abweicht und stattdessen beispielsweise oval, elliptisch oder polygonal ist. So kann eine wirksame Verdrehsicherung des Befestigungselements in dem ersten Werkstück erzielt werden.

Alternativ oder zusätzlich kann eine radiale Außenfläche des Ringabschnitts zumindest ein Verdrehsicherungsmerkmal aufweisen, insbesondere zumindest eine Vertiefung und/oder zumindest eine Erhebung. Ein solches Verdrehsicherungsmerkmal kann eine oder mehrere Nuten, Rippen oder eine Rändelung umfassen, wobei das oder die Verdrehsicherungsmerkmale für eine besonders wirksame Verdrehsicherung beispielsweise in Umfangsrichtung über die Außenkontur des Ringabschnitts verteilt angeordnet sein können.

Gemäß einer weiteren Ausführungsform ist die Werkstückanlagefläche abschnittsweise mit einer Erhebung versehen, die insbesondere ringförmig ausgestaltet ist und/oder die in einem der Öffnung benachbarten oder an diese angrenzenden, radial innenliegenden Bereich der Werkstückanlagefläche angeordnet ist. Beispielsweise kann die Erhebung sich ringförmig um die Öffnung des Ringabschnitts erstrecken, wobei sie insbesondere über eine konisch zulaufende Schräge in die Innenkontur der Öffnung übergehen kann.

Wird die Werkstückanlagefläche während des Setzvorgangs an das erste Werkstück angenähert, so kommt die Erhebung der Werkstückanlagefläche mit dem Werkstück zuerst in Kontakt. Vorteilhafterweise biegt die Erhebung das Werkstück beim Einstanzen des Ringabschnitts vor, sodass die anschließend mit dem Werkstück in Kontakt tretende Stanzkante auf einen gebogenen und daher unter Spannung stehenden Werkstückabschnitt einwirkt. Der Stanzprozess kann somit erleichtert werden. Zudem kann durch die aus der Werkstückanlagefläche ragende Erhebung ein Stanzbutzen zuverlässig aus dem ersten Werkstück ausgestoßen werden. Für eine sichere Verbindung des ersten Werkstücks mit dem zweiten Werkstück kann die Erhebung während des Befestigungsvorgangs als Gegenmatrize bzw. Umformstempel dienen, wie nachfolgend noch erläutert wird.

Für eine besonders zuverlässige Befestigung kann der Schaftabschnitt an seiner radialen Außenseite zumindest eine Vertiefung aufweisen, die zumindest abschnittsweise in Umfangsrichtung verläuft, insbesondere wobei die Vertiefung eine in Umfangsrichtung verlaufende Nut ist. Vorteilhafterweise kann der Schaftabschnitt auch mehrere nutartige Vertiefungen aufweisen, welche beispielsweise parallel zueinander verlaufen und welche beispielsweise über einen Abschnitt oder die gesamte axiale Erstreckung des Schaftabschnitts verteilt angeordnet sind.

Auch lediglich teilweise umlaufende Nuten können vorgesehen sein. Bevorzugt sind Vertiefungen in einem Bereich des Schaftabschnitts angeordnet, der sich in einem Vormontagezustand des Befestigungselements in axialer Richtung an den Ringabschnitt anschließt und der insbesondere nach einem Durchführen des Schaftabschnitts durch den Ringabschnitt auf Seiten der Werkstückanlagefläche aus dem Ringabschnitt hervorsteht. Die in diesem Bereich des Schaftabschnitts angeordneten Vertiefungen können in einem Montagezustand des Befestigungselements gegebenenfalls verdrängtes Material insbesondere des zweiten Werkstücks aufnehmen, um eine wirksame Befestigung zu gewährleisten.

In einem axialen Bereich des Schaftabschnitts, der in einem Montagezustand des Befestigungselements innerhalb des Ringabschnitts verbleibt, kann gegebenenfalls auf derartige Vertiefungen verzichtet werden. Zur sicheren Befestigung des Schaftabschnitts in dem Ringabschnitt, beispielsweise durch eine Presspassung zwischen einer Außenkontur des Schaftabschnitts und der Innenkontur des Ringabschnitts, kann vorgesehen sein, dass sich der Schaftabschnitt von dem Koppelabschnitt zu seinem dem Ringabschnitt abgewandten Ende konisch aufweitet. Gegebenenfalls kann die Innenkontur des Ringabschnitts eine korrespondierende Konusform aufweisen.

Denkbar ist auch, dass der Schaftabschnitt zumindest abschnittsweise eine oder mehrere axiale Vertiefungen aufweist, welche nach dem Durchführen des Schaftabschnitts durch den Ringabschnitt als Verdrehsicherung des Schaftabschnitts wirken kann. Diese entlang der Längsachse des Befestigungselements angeordnete zumindest eine axiale Vertiefung kann ebenfalls nutartig ausgebildet sein, wobei insbesondere mehrere axiale Vertiefungen in Umfangsrichtung über den Schaftabschnitt verteilt angeordnet sind.

Alternativ oder zusätzlich kann für eine verdrehsichere Befestigung der Schaftabschnitt an seiner radialen Außenseite zumindest eine Erhebung aufweisen, die zumindest abschnittsweise in axialer Richtung verläuft, insbesondere wobei die Erhebung eine in axialer Richtung verlaufende Rippe umfasst. Eine solche Erhebung kann sich beim Durchdringen des Ringabschnitts beispielsweise in eine Wandung der Öffnung eingraben und ein Verdrehen des Schaftabschnitts relativ zu dem Ringabschnitt wirksam verhindern. Erstreckt sich die axial verlaufende Erhebung in einem Bereich des Schaftabschnitts, der in einem Montagezustand auf Seiten der Werkstückanlagefläche über den Ringabschnitt hinaussteht, kann auch eine Verdrehsicherung gegenüber dem ersten und/oder zweiten Werkstück bewirkt werden.

Vorteilhafterweise kann der Schaftabschnitt an seinem dem Ringabschnitt abgewandten Ende einen radial erweiterten Kopfabschnitt aufweisen, der die Innenkontur der Öffnung in radialer Richtung zumindest abschnittsweise überragt. Der radial erweiterte Kopfabschnitt kann beim Durchführen des Schaftabschnitts durch die Öffnung des Ringabschnitts gewissermaßen als axialer Anschlag dienen, der verhindert, dass der Schaftabschnitt vollständig in den Ringabschnitt hinein oder durch diesen hindurch geführt wird. Der radial erweiterte Kopfabschnitt kann zugleich als zweite Angriffsfläche für eine zweite Setzeinrichtung dienen, mittels derer der Schaftabschnitt durch den Ringabschnitt führbar ist. Besonders vorteilhaft ist es, wenn der radial erweiterte Kopfabschnitt beim Durchführen durch den Ringabschnitt schließlich zumindest bereichsweise in Eingriff mit der Angriffsfläche für die erste Setzeinrichtung gerät. Ein Kraftübertrag von der zweiten Setzeinrichtung auf den Ringabschnitt ist dann - ausschließlich oder zusätzlich - mittelbar über den radial erweiterten Kopfabschnitt möglich.

Gemäß einer konstruktiv besonders einfachen und günstig herzustellenden Bauform des Befestigungselements weist ein Grundkörper des Schaftabschnitts eine zumindest im Wesentlichen zylindrische Form auf, wobei die Öffnung des Ringabschnitts zumindest im Wesentlichen kreisförmig sein kann. Abweichungen von der zylindrischen Form können beispielsweise durch Vertiefungen oder Erhebungen, insbesondere Nuten oder Rippen, gebildet sein, welche zur sicheren Verankerung und/oder Verdrehsicherung des Schaftabschnitts beitragen.

Der Koppelabschnitt kann derart ausgestaltet sein, das zwischen dem Schaftabschnitt und dem Ringabschnitt ein Reibschluss, ein Stoffschluss und/oder ein Formschluss hergestellt ist. Insbesondere ist die Verbindung zwischen Ringabschnitt und Schaftabschnitt stark genug, um den Schaftabschnitt beispielsweise für einen Transport sowie während des Einstanzens des Befestigungselements mittels einer ersten Setzeinrichtung verliersicher an dem Ringabschnitt zu befestigen. Für das Durchführen des Schaftabschnitts durch den Ringabschnitt sollte die Verbindung jedoch hinreichend leicht trennbar sein, beispielsweise durch eine zweite Setzeinrichtung.

Eine derartige Verbindung kann auf verschiedene Weise erzeugt werden, beispielsweise durch einen Reibschluss mittels einer Klemmverbindung oder Presspassung, durch Aufschrumpfen des Ringabschnitts auf den Schaftabschnitt, durch Einpressen des Schaftabschnitts in den Ringabschnitt, durch einen Stoffschluss mittels Kleben oder Löten, durch einen Formschluss mittels eines abscherbaren Hinterschnitts, Rastnasen, eine Clipsverbindung oder durch weitere, grundsätzlich bekannte Verbindungsarten. Ebenso ist eine Kombination verschiedener Verbindungstypen möglich.

Für eine besonders flexible Einsetzbarkeit des Befestigungselements können der Schaftabschnitt und der Ringabschnitt verschiedene Materialien umfassen. Beispielsweise kann der Ringabschnitt für eine Verbindung mit dem ersten Werkstück aus einem ersten Material optimiert sein, der Schaftabschnitt für eine Verbindung mit dem Ringabschnitt einerseits und dem zweiten Werkstück aus einem zweiten Material andererseits. Insbesondere bei Mischbauweisen, wobei das Material des ersten Werkstücks und des zweiten Werkstücks voneinander verschieden sind, kann so eine besonders zuverlässige Verbindung erzielt werden.

Für eine besonders einfache und günstige Herstellung des Befestigungselements sind der Schaftabschnitt und der Ringabschnitt gemäß einer Ausführungsform einstückig ausgebildet. In diesem Fall sind der Schaftabschnitt und der Ringabschnitt aus demselben Material ausgebildet. Der Koppelabschnitt des Befestigungselements kann eine Sollbruchstelle sein, welche zur Erleichterung der Trennung von Schaftabschnitt und Ringabschnitt gegebenenfalls eine oder mehrere Durchbrechungen oder Schwächezonen aufweisen kann.

Weiterer Gegenstand der Erfindung ist ein Zusammenbauteil umfassend ein erstes Werkstück, in das der Ringabschnitt eines Befestigungselements gemäß zumindest einer der vorstehend beschriebenen Ausführungsformen eingestanzt ist. Ein aus dem ersten Werkstück ausgestanzter Stanzbutzen ist entsorgt. Der selbststanzende Ringabschnitt ist mit dem ersten Werkstück zuverlässig verbunden. Der Schaftabschnitt und der Ringabschnitt sind noch mittels des Koppelabschnitts miteinander gekoppelt und der Schaftabschnitt schließt sich in Längsrichtung des Befestigungselements an die Angriffsfläche des Befestigungselements an.

Gemäß einer vorteilhaften Ausführungsform ist eine dem Befestigungselement vor dem Einstanzen abgewandte Oberfläche des ersten Werkstücks in einem Bereich benachbart zu oder angrenzend an eine durch das Einstanzen erzeugte Öffnung in dem ersten Werkstück im Wesentlichen bündig mit der Werkstückanlagefläche angeordnet. Die Einstanzrichtung fällt vorteilhafterweise mit der Längsrichtung des Befestigungselements zusammen und entspricht der Richtung, in der das selbststanzende Befestigungselement beim Einstanzen mit einer Einpresskraft beaufschlagt wird. Somit sind, betrachtet von dem Schaftende zu dem Ringende des Befestigungselements, in Längsrichtung eine dem Schaftende abgewandte Seite des ersten Werkstücks und die Werkstückanlagefläche miteinander ausgerichtet, während eine Erhebung der Werkstückanlagefläche - falls eine solche vorgesehen ist - über diese Seite des ersten Werkstücks in axialer Richtung heraussteht.

Zur Verbindung des ersten und eines zweiten Werkstücks miteinander kann das zweite Werkstück nun vorteilhafterweise auf dieser dem Schaftabschnitt abgewandten Seite an die Werkstückanlagefläche des Befestigungselements und, bei Blechteilen insbesondere parallel zu dem ersten Werkstück, an das Zusammenbauteil angelegt werden und anschließend daran befestigt werden.

Das Zusammenbauteil kann ferner ein zweites Werkstück umfassen, das an der Werkstückanlagefläche anliegt, wobei die durch den Koppelabschnitt bereitgestellte Verbindung des Schaftabschnitts und des Ringabschnitts getrennt ist und der Schaftabschnitt derart in der Öffnung des Ringabschnitts angeordnet ist, dass ein Ende des Schaftabschnitts in das zweite Werkstück ragt oder durch das zweite Werkstück hindurch ragt. Das zweite Werkstück kann somit formschlüssig und/oder kraftschlüssig mit dem Schaftabschnitt und/oder dem Ringabschnitt verbunden sein. Insbesondere ist für eine besonders zuverlässige Verbindung der Schaftabschnitt in dem Ringabschnitt formschlüssig und/oder kraftschlüssig aufgenommen.

Gemäß einer weiteren Ausführungsform weist eine dem Ringabschnitt abgewandte Oberfläche des zweiten Werkstücks eine Vertiefung, insbesondere ringförmige Vertiefung, auf, die radial außerhalb und benachbart zu dem in das zweite Werkstück ragenden oder durch das zweite Werkstück ragenden Ende des Schaftabschnitts angeordnet ist. Eine derartige Vertiefung kann beispielsweise durch eine Matrize erzeugt sein, insbesondere eine Matrize einer zweiten Setzeinrichtung. Das aus der Vertiefung verdrängte Material kann zu einer sicheren Verbindung des ersten und zweiten Werkstücks durch das Befestigungselement beitragen.

Insbesondere ist, beispielsweise durch die Wirkung einer Matrize und/oder durch eine Erhebung auf der Werkstückanlagefläche, Material des zweiten Werkstücks in zumindest eine Vertiefung gedrängt, die an einer radialen Außenseite des Schaftabschnitts angeordnet ist. Das Material kann auch in mehrere Vertiefungen des Ring- und/oder Schaftabschnitts oder in zwischen Ring- und Schaftabschnitt verbliebene Aussparungen gedrängt werden, sodass eine besonders zuverlässige Befestigung der Werkstücke erzielt wird, welche in Abhängigkeit von der Ausgestaltung der Vertiefungen, gegebenenfalls verdrehsicher ist.

Das Material des ersten Werkstücks kann zumindest in einem Bereich um das Befestigungselement fester als das Material des zweiten Werkstücks sein, wobei insbesondere das erste Werkstück in diesem Bereich Stahl, bevorzugt hochfesten Stahl, umfasst und das zweite Werkstück in diesem Bereich Aluminium umfasst. Das erste Werkstück kann somit zur besonders stabilen Verankerung des Befestigungselements und des zweiten Werkstücks beitragen. Bevorzugt liegt die Festigkeit des ersten Werkstücks im Bereich von 800 bis 2000 MPa, besonders bevorzugt im Bereich von 1200 bis 2000 MPa. Bevorzugt liegt die Festigkeit des zweiten Werkstücks im Bereich von 80 bis 600 MPa.

Die Erfindung betrifft weiter ein Verfahren zur Herstellung eines Zusammenbauteils gemäß zumindest einer der vorstehend beschriebenen Ausführungsformen. Das Verfahren umfasst zumindest die Schritte (1) Bereitstellen eines ersten Werkstücks, (2) Einstanzen eines Ringabschnitts eines Befestigungselements gemäß zumindest einer vorstehend beschriebenen Ausführungsform unter Erzeugung eines Stanzbutzens in das erste Werkstück, wobei bei dem Einstanzen eine erste Setzeinrichtung auf die Angriffsfläche des Ringabschnitts wirkt.

Das Einstanzen kann bei einem oder anschließend an ein Presshärten des ersten Werkstücks erfolgen.

Die erste Setzeinrichtung kann einen Stempel und eine Matrize umfassen, wobei der Stempel der ersten Setzeinrichtung vorteilhafterweise eine Aussparung für den Schaftabschnitt des Befestigungselements aufweist und eine Kontaktfläche, welche mit der Angriffsfläche des Ringabschnitts in Eingriff bringbar ist. Durch Herunterdrücken des Stempels entlang einer Einstanzrichtung, welche insbesondere mit der Längsrichtung des Befestigungselements zusammenfällt, kann der Ringabschnitt mit einer, insbesondere senkrecht zu einer Oberfläche des ersten Werkstücks wirkenden, Einpresskraft beaufschlagt werden. Mittels der Stanzkante des Ringabschnitts kann so ein zur Befestigung des Befestigungselements erforderliches Loch in dem ersten Werkstück erzeugt werden. Das erste Werkstück braucht also zur Anbringung des Befestigungselements kein vorgefertigtes Loch aufweisen. Die Matrize kann eine, insbesondere zentrale und mit dem Stempel koaxiale, Durchgangsöffnung aufweisen, durch welche der Stanzbutzen entsorgt wird.

Gemäß einer Ausführungsform kann das Werkstück vor dem Einsetzen des Befestigungselements zumindest lokal erwärmt werden, insbesondere auf eine Temperatur von über 500°C, über 600°C, über 700°C, über 800°C, über 900°C oder über 1000°C, beispielsweise bis zu 1030°C. Während des Einsetzens des Befestigungselements kann die Temperatur geringer sein, als die maximal beim Erwärmen des Werkstücks erreichte Temperatur und kann beispielsweise bei 500°C bis 800°C liegen. Das Erwärmen des Werkstücks kann den Einstanzvorgang vereinfachen, wobei die Temperatur des ersten Werkstücks vorteilhafterweise in Abhängigkeit von den verwendeten Materialien des Werkstücks und/oder des Befestigungselements geeignet wählbar ist. Vorteilhafterweise kann somit ein Befestigungselements in ein Werkstück eingesetzt werden, dessen Festigkeit die des Befestigungselements in nicht erwärmtem Zustand übersteigt. Beispielsweise kann das Erwärmen des ersten Werkstücks im Rahmen eines Presshärte- oder Warmumformverfahrens erfolgen.

Grundsätzlich wird auf diese Weise das Einsetzen von Befestigungselementen, wie beispielsweise Stanznieten, in Bleche möglich, die, insbesondere im wieder abgekühlten Zustand, hochfest sind und beispielsweise eine Festigkeit von größer als 600 MPa, insbesondere größer als 1200 MPa und bis zu 2000 MPa oder sogar größer als 2000 MPa aufweisen. Zugleich wird durch das Erwärmen die Entstehung von Mikrorissen in dem Werkstück, wirksam vermieden. Da sich das Werkstück beim Abkühlen nach dem Stanzvorgang zusammenzieht und somit eine stabilisierende Klemmwirkung auf das eingestanzte Befestigungselement ausübt, resultiert eine besonders stabile und zuverlässige Verbindung.

Im Anschluss an zumindest einen der vorstehend beschriebenen Schritte des Verfahrens, insbesondere nach dem Einstanzen des Befestigungselements in das erste Werkstück, kann ein zweites Werkstück derart bereitgestellt werden, dass es in Anlage mit der Werkstückanlagefläche des in das erste Werkstück eingestanzten Ringabschnitts ist, wobei der Schaftabschnitt anschließend mittels einer zweiten Setzeinrichtung durch die Öffnung des Ringabschnitts und gegen das zweite Werkstück gepresst wird, so dass ein Ende des Schaftabschnitts in das zweite Werkstück ragt oder durch das zweite Werkstück hindurch ragt. Die zweite Setzeinrichtung kann einen zweiten Stempel und eine zweite Matrize umfassen, wobei der Stempel insbesondere auf den Schaftabschnitt wirkt, beispielsweise über einen zweite Angriffsfläche die dem Kopfabschnitt des Schaftabschnitts zugeordnet ist. Zudem kann die zweite Setzeinrichtung einen Niederhalter umfassen, der das erste Werkstück mit dem darin eingestanzten Ringabschnitt gegen die zweite Matrize und/oder das zweite Werkstück fixiert. Beispielsweise kann der Niederhalter einen ringförmigen Querschnitt aufweisen und um das Befestigungselement herum positioniert sein. Durch Beaufschlagung des Schaftabschnitts mit einer, insbesondere entlang der Längsrichtung des Schaftabschnitts wirkenden, Einpresskraft wird bevorzugt zunächst der Koppelabschnitt getrennt, sodass der Schaftabschnitt relativ zu dem Ringabschnitt bewegbar wird, und anschließend wird der Schaftabschnitt durch den Ringabschnitt geführt.

Gemäß einer Ausführungsform des Verfahrens wird das zweite Werkstück nicht erwärmt. Insbesondere wird das zweite Werkstück in etwa bei Raumtemperatur bzw. bei einer typischerweise unter den gegebenen Fertigungsbedingungen herrschenden Temperatur an das erste Werkstück mit dem eingestanzten Ringabschnitt angefügt. Insbesondere ist kein aktives Erwärmen des zweiten Werkstücks vorgesehen, wobei ein (vergleichsweise geringfügiges) Erwärmen durch den Stanzvorgang selbst nicht ausgeschlossen ist.

Bevorzugt wird bei dem Einpressen des Schaftabschnitts in das zweite Werkstück ein Stanzbutzen aus dem zweiten Werkstück ausgestanzt. Zur Entsorgung des zweiten Stanzbutzens kann die zweite Matrize der zweiten Setzeinrichtung eine entsprechende Öffnung aufweisen, die auch den gegebenenfalls durch das zweite Werkstück durchtretenden Schaftabschnitt aufnehmen kann.

Ein vollständiges Durchdringen des zweiten Werkstücks und das Ausstanzen eines Stanzbutzens durch den Schaftabschnitt ist nicht zwingend erforderlich, um eine stabile Verbindung des ersten Werkstücks mit dem zweiten Werkstück herstellen. Beispielsweise kann vorgesehen sein, dass der Schaftabschnitt in das Material des zweiten Werkstücks eingepresst wird, ohne dieses zu durchdringen, wobei eine Umformung des Schaftabschnitts, beispielsweise ein radiales Aufweiten innerhalb des zweiten Werkstücks vorgesehen sein kann, das eine Verankerung des Schaftabschnitts in dem zweiten Werkstück gewährleistet. In vielen Fällen ist ein Durchdringen des zweiten Werkstücks mit oder ohne Aufweiten des Schaftabschnitts jedoch vorteilhaft.

Insbesondere wirkt die zweite Setzeinrichtung zunächst auf den Schaftabschnitt, um diesen gegen das zweite Werkstück zu pressen, bis der Schaftabschnitt eine gewünschte Endlage, insbesondere relativ zu dem Ringabschnitt, erreicht hat. Anschließend wirkt die zweite Setzeinrichtung auf den Ringabschnitt, insbesondere über die Angriffsfläche, um den Ringabschnitt gegen das zweite Werkstück zu pressen. Der Stempel der zweiten Setzeinrichtung kann zu diesem Zweck einen Kontaktabschnitt zur Kontaktierung des Befestigungselements aufweisen, der derart ausgestaltet ist, dass er zu Beginn des zweiten Setzvorgangs mittels eines ersten Bereichs des Kontaktabschnitts eine zweite Angriffsfläche des Befestigungselements, welche insbesondere an dem Schaftabschnitt angeordnet ist, kontaktiert und den Schaftabschnitt mit einer Einpresskraft beaufschlagt, bis dieser die gewünschte Endlage relativ zu dem Ringabschnitt bzw. in dem Ringabschnitt erreicht hat. Der Kontaktabschnitt des zweiten Stempels kann ferner einen zweiten Bereich aufweisen, der insbesondere den ersten Bereich radial außenseitig umgibt, und der bei Erreichen der relativen Endlage zwischen Schaftabschnitt und Ringabschnitt den Ringabschnitt, insbesondere die Angriffsfläche, kontaktiert, und diesen mit einer Einpresskraft in Richtung des zweiten Werkstücks beaufschlagt. Vorteilhafterweise bleibt dabei der erste Bereich des zweiten Stempels mit dem Schaftabschnitt in Eingriff, sodass die relative Ausrichtung von Schaftabschnitt und Ringabschnitt erhalten bleibt.

Alternativ kann vorgesehen sein, dass der zweite Stempel lediglich einen vorstehend beschriebenen ersten Bereich aufweist, der mit einem Kopfabschnitt des Schaftabschnitts zusammenwirkt. In der gewünschten Endlage des Schaftabschnitts relativ zu dem Ringabschnitt kann der Kopfabschnitt des Schaftabschnitts mit dem Ringabschnitt, insbesondere mit der Angriffsfläche in Eingriff geraten, sodass bei weiterer Beaufschlagung des Schaftabschnitts mit einer Einpresskraft durch den zweiten Stempel der Ringabschnitt mit dem Schaftabschnitt gewissermaßen in Richtung des zweiten Werkstücks mitgenommen und auf dieses gepresst wird, während der Schaftabschnitt und der Ringabschnitt sich relativ zueinander zumindest im Wesentlichen nicht mehr bewegen.

Das zweite Werkstück kann bei dem Einpressen des Schaftabschnitts auf einer Matrize aufliegen, die eine aus einer Auflagefläche für das zweite Werkstück ragende Erhebung aufweist, die eine radiale Innenkontur aufweist, die in radialer Richtung außerhalb der Außenkontur des Schaftabschnitts liegt, insbesondere wobei durch die Matrize Material des zweiten Werkstücks gegen den Schaftabschnitt und gegebenenfalls in zumindest eine Vertiefung gedrängt wird, die an einer radialen Außenseite des Schaftabschnitts angeordnet ist, wobei insbesondere eine Erhebung der Werkstückanlagefläche als Gegenmatrize wirkt, um Material des zweiten Werkstücks in die zumindest eine Vertiefung zu drängen, die an der radialen Außenseite des Schaftabschnitts angeordnet ist. Die aus der Auflagefläche ragende Erhebung kann beispielsweise ringförmig ausgebildet sein, wobei die Innenkontur der Erhebung radial innenseitig, d.h. in Richtung der Außenkontur des Schaftabschnitts, konisch in Richtung einer Öffnung der Matrize abfallen kann. Die Erhebung der Matrize kann das Material des zweiten Werkstücks insbesondere dann verdrängen, wenn der Ringabschnitt auf der der Matrize abgewandten Seite des zweiten Werkstücks gegen dieses gepresst wird. Die Werkstückanlagefläche bzw. eine mit der Erhebung auf der Matrize korrespondierende Erhebung der Werkstückanlagefläche kann als Gegenmatrize bzw. Umformstempel wirken, um Material des zweiten Werkstücks in zumindest eine Vertiefung des Schaftabschnitts und gegebenenfalls in konisch abfallende Bereiche der Erhebungen auf Matrize und/oder Werkstückanlagefläche zu drängen.

Bevorzugt wirken die erste und die zweite Setzeinrichtung in Bezug auf die Längsachse des Befestigungselements koaxial und in gleicher Einstanzrichtung.

Nachfolgend wird die Erfindung rein beispielhaft anhand einer möglichen Ausführungsform unter Bezugnahme auf die beigefügte Zeichnung beschrieben. Es zeigen:
- Fig. 1A: eine erste perspektivische Ansicht eines erfindungsgemäßen Befestigungselements;
- Fig. 1B: eine zweite perspektivische Ansicht des Befestigungselements der Fig. 1;
- Fig. 1C: eine axiale Stirnansicht auf den Ringabschnitt des Befestigungselements der Fig. 1;
- Fig. 10: eine Seitenansicht und Querschnittsansicht des Befestigungselements der Fig. 1;

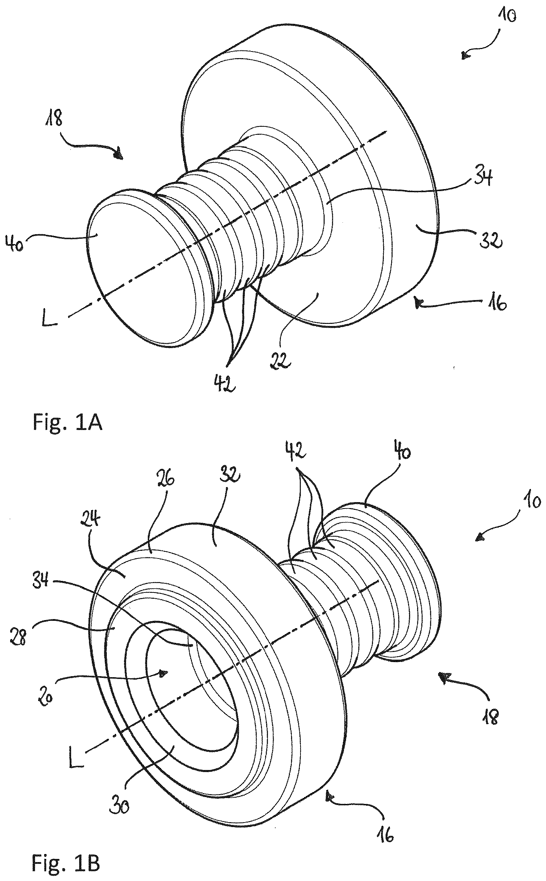

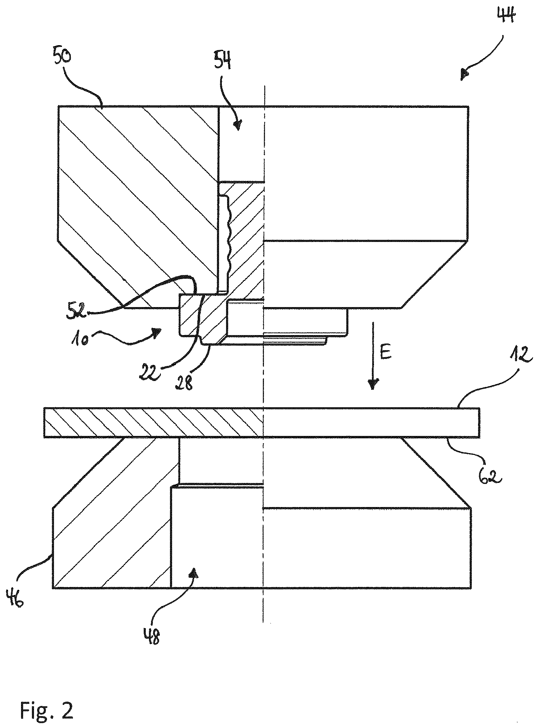

- Fig. 2: das Befestigungselement der Fig. 1A-1D und eine erste Setzeinrichtung vor dem Einbringen des Befestigungselements in ein erstes Werkstück;

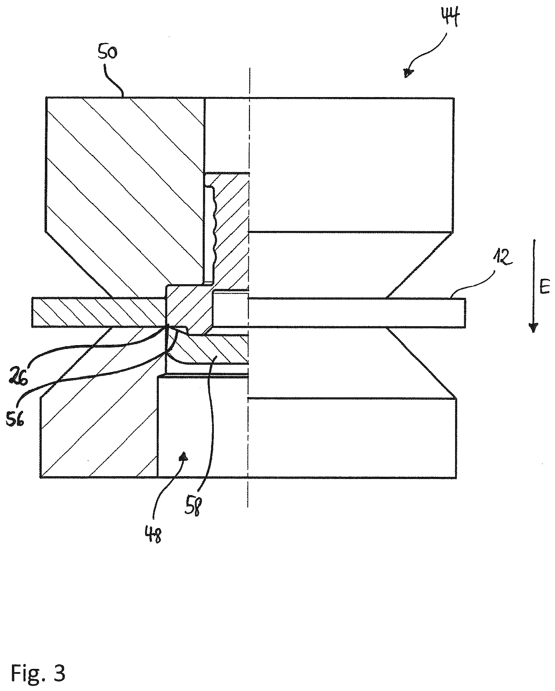

- Fig. 3: das Befestigungselement der Fig. 1A-D und die erste Setzeinrichtung während des Einstanzens des Befestigungselements in das erste Werkstück;

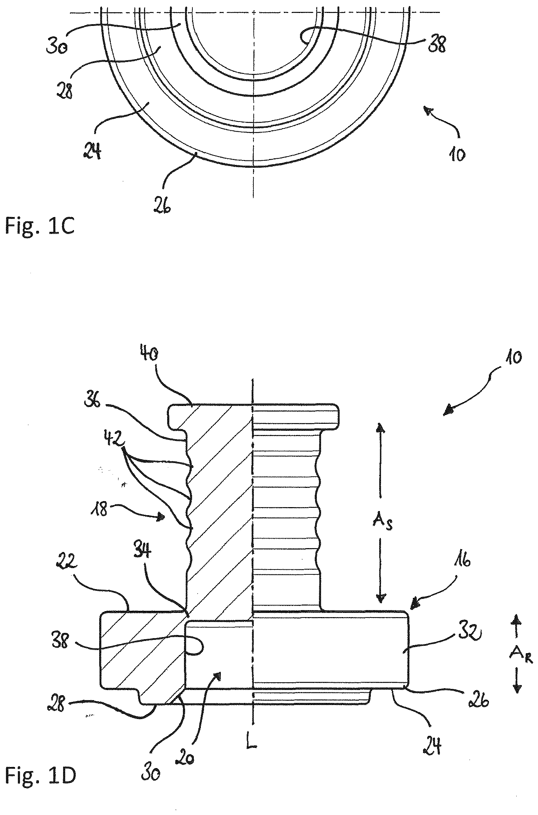

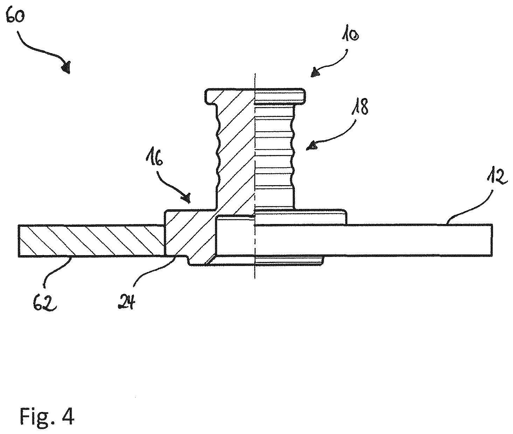

- Fig. 4: eine Schnittansicht einer Ausführungsform des erfindungsgemäßen Zusammenbauteils, umfassend das erste Werkstück und das eingestanzte Befestigungselement der Fig. 1;

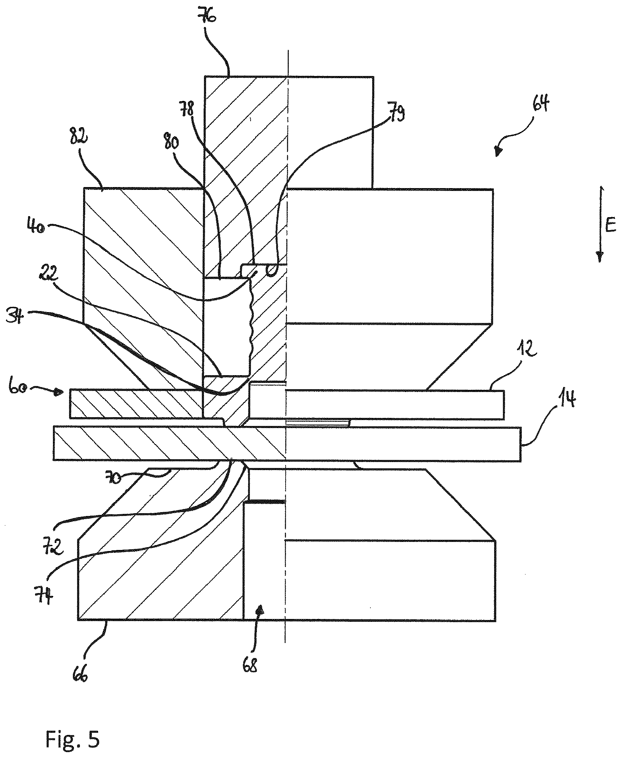

- Fig. 5: das Zusammenbauteil der Fig. 4 und eine zweite Setzvorrichtung vor dem Verbinden mit einem zweiten Werkstück;

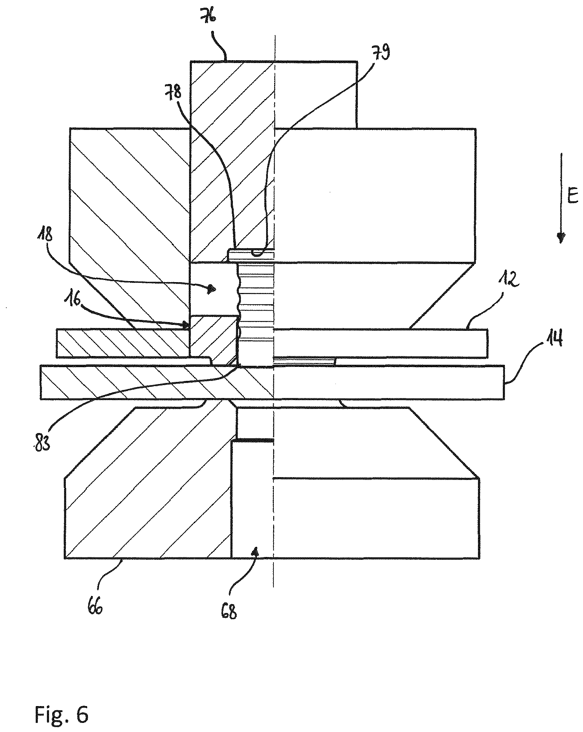

- Fig. 6: das Zusammenbauteil der Fig. 4 und die zweite Setzvorrichtung während des Durchführens des Schaftabschnitts durch den Ringabschnitt;

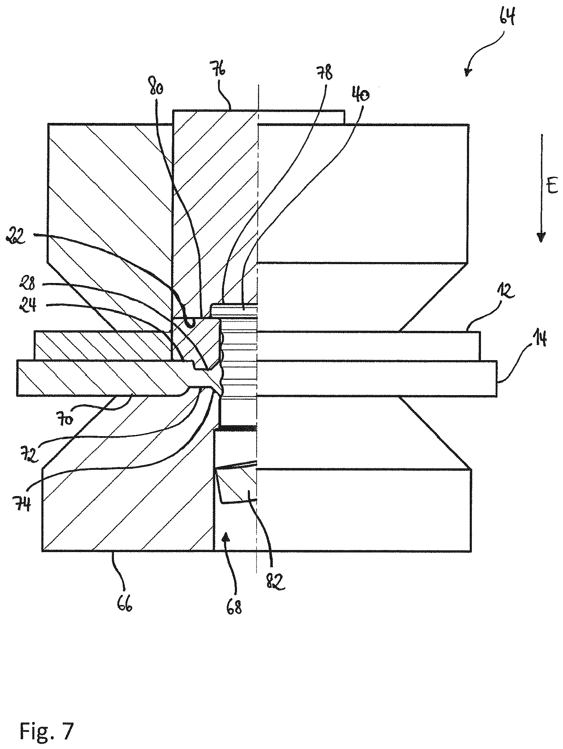

- Fig. 7: das Zusammenbauteil der Fig. 4 und die zweite Setzvorrichtung während des Verbindens mit dem zweiten Werkstück;

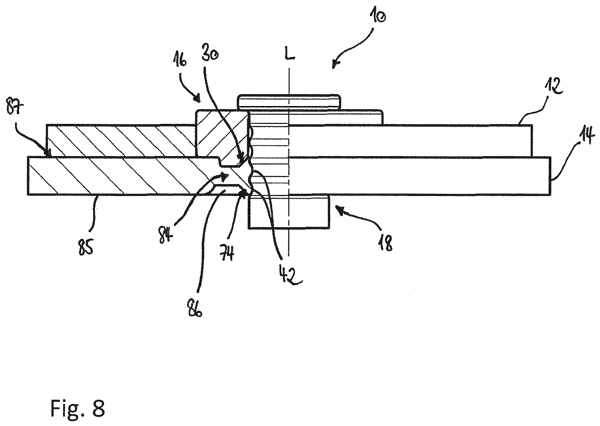

- Fig. 8: das Zusammenbauteil der Fig. 7, umfassend das erste Werkstück, das zweite Werkstück und das befestigte Befestigungselement.

Fig. 1A zeigt ein selbststanzendes Befestigungselement 10 aus einem Metall zur Verbindung eines ersten Werkstücks 12 (siehe Fig. 2) und eines zweiten Werkstücks 14 (siehe Fig. 5). Das Befestigungselement umfasst einen Ringabschnitt 16 und einen Schaftabschnitt 18, welche entlang einer Längsachse L des Befestigungselements 10 koaxial angeordnet sind.

Der Ringabschnitt 16 weist nach Art eines Kreisrings eine kreisförmige Außenkontur auf und umgibt eine kreisrunde axiale Öffnung 20 in Umfangsrichtung (siehe Fig. 1B). Auf seiner dem Schaftabschnitt 18 zugewandten Seite weist der Ringabschnitt 16 eine sich in radialer Richtung erstreckende, ringförmige Angriffsfläche 22 (Fig. 1A) für eine erste Setzeinrichtung 44 (siehe Fig. 2) auf. Auf der dem Schaftabschnitt 18 und der Angriffsfläche 22 abgewandten Seite des Ringabschnitts 16 ist eine ringförmige Werkstückanlagefläche 24 angeordnet, welche zumindest abschnittsweise parallel zu der Angriffsfläche 22 ausgerichtet ist.

Die Werkstückanlagefläche 24 ist radial außenseitig von einer Stanzkante 26 begrenzt, welche dazu vorgesehen ist, beim Einstanzen des Befestigungselements 10 ein Loch in das erste Werkstück 12 zu stanzen, in welches das Befestigungselement 10 bzw. der Ringabschnitt 16 eingesetzt werden.

Radial innenseitig weist die Werkstückanlagefläche 24 eine Erhebung 28 auf, die im vorliegenden Ausführungsbeispiel ringförmig ausgestaltet ist und etwa die halbe radiale Breite der Werkstückanlagefläche 24 aufweist. Die Erhebung 28 ist der Öffnung 20 radial benachbart, wobei der Übergang von der Öffnung 20 zu der Erhebung 28 als Übergangskonus 30 ausgebildet ist.

Der hier gezeigte Ringabschnitt 16 des Befestigungselements 10 ist rotationssymmetrisch um die Längsachse L. Grundsätzlich kann der Ringabschnitt 16 jedoch auch eine von der Ringform abweichende Außenkontur aufweisen und beispielsweise einen ovalen oder polygonalen Querschnitt aufweisen. Durch eine solche alternative Ausgestaltung kann beispielsweise eine wirksame Verdrehsicherung des Ringabschnitts 16 nach dem Einbringen in ein erstes Werkstück 12 erzielt werden. Alternativ oder zusätzlich kann eine radiale Außenfläche 32 des Ringabschnitts 16 auch mit einem oder mehreren Verdrehsicherungsmerkmalen, beispielsweise Erhebungen oder Vertiefungen, versehen sein (nicht gezeigt). Denkbar ist das Anbringen von, insbesondere axialen, Nuten, Rippen, Rillen oder eine Rändelung der radialen Außenfläche 32.

Auf der der Werkstückanlagefläche 24 abgewandten Seite des Ringabschnitts 16 schließt sich in axialer Richtung des Befestigungselements 10 der Schaftabschnitt 18 an den Ringabschnitt 16 an, wobei der Schaftabschnitt 18 mit der Öffnung 20 des Ringabschnitts 16 koaxial angeordnet ist. Der Schaftabschnitt 18 weist im gezeigten Ausführungsbeispiel eine runde Querschnittsfläche und eine im Wesentlichen zylindrische Form auf.

Der Schaftabschnitt 18 ist mit dem Ringabschnitt 16 mittels eines Koppelabschnitts 34 verbunden (siehe Fig. 1D). Im gezeigten Ausführungsbeispiel sind der Ringabschnitt 16 und der Schaftabschnitt 18 einstückig ausgebildet, wobei der Koppelabschnitt 34 eine Art Brücke zwischen Ringabschnitt 16 und Schaftabschnitt 18 umfasst, die aus dem gleichen Material wie der Ringabschnitt 16 und der Schaftabschnitt 18 besteht.

Grundsätzlich kann der Koppelabschnitt 34 auch derart ausgestaltet sein, dass der Schaftabschnitt 18 mit dem Ringabschnitt 16 reibschlüssig oder formschlüssig, beispielsweise durch Klemmen oder eine Schnappverbindung, befestigt ist. In diesem Fall können Ringabschnitt 16 und Schaftabschnitt 18 auch aus verschiedenen Materialien gefertigt sein. In jedem Fall ist der Koppelabschnitt 34 als eine Art Sollbruchstelle des Befestigungselements 10 ausgebildet, an dem der Ringabschnitt 16 von dem Schaftabschnitt 18 gezielt abtrennbar ist.

Der Schaftabschnitt 18 erstreckt sich von dem Ringabschnitt 16 zu seinem dem Ringabschnitt abgewandten Ende, wo er einen radial erweiterten Kopfabschnitt 40 aufweist. Der radial erweiterte Kopfabschnitt 40 überragt in radialer Richtung einerseits eine Außenkontur 36 des Schaftabschnitts 18 und andererseits eine Innenkontur 38 der Öffnung 20 des Ringabschnitts 16.

Die Außenkontur 36 des Schaftabschnitts 18 ist derart ausgestaltet, dass sie komplementär zu einer Innenkontur 38 der Öffnung 20 des Ringabschnitts 16 ist. Im gezeigten Ausführungsbeispiel (siehe Fig. 1D) korrespondieren die Innenkontur 38 bzw. der Innendurchmesser der kreisförmigen Öffnung 20 und die Außenkontur 36 bzw. der Außendurchmesser des im Wesentlichen zylindrischen Schaftabschnitts 18 derart miteinander, dass der Schaftabschnitt 18 in der Öffnung 20 nach einer Trennung des Koppelabschnitts 34 aufnehmbar ist.

Wenn die durch den Koppelabschnitt 34 bereitgestellte Kopplung aufgehoben wird, kann der Schaftabschnitt 18 durch den Ringabschnitt 16 geführt werden. Da eine axiale Erstreckung As des Schaftabschnitts 18 größer ist als eine axiale Erstreckung A_{R} des Ringabschnitts 16, kann der Schaftabschnitt 18 soweit durch die Öffnung 20 geführt werden, bis er auf Seiten der Werkstückanlagefläche 24 des Ringabschnitts 16 wieder aus diesem hervortritt. Auf Seiten der Angriffsfläche 22 kann der Schaftabschnitt 18 soweit durch die Öffnung 20 des Ringabschnitts geführt werden, bis der radial erweiterte Kopfabschnitt 40 mit der Angriffsfläche 22 des Ringabschnitts 16 in Eingriff gerät und eine weitere axiale Verschiebung des Schaftabschnitts 18 relativ zu dem Ringabschnitt 16 verhindert wird. Der radial erweiterte Kopfabschnitt 40 dient somit als axialer Anschlag für den Schaftabschnitt 18 (siehe Fig. 7).

Der Schaftabschnitt 18 weist auf seiner Außenkontur mehrere in Umfangsrichtung verlaufende, rillenartige bzw. nutartige Vertiefungen 42 auf. Diese Vertiefungen ermöglichen, wie aus den Fig. 7 und Fig. 8 deutlich wird, eine besonders wirksame axiale Auszugssicherung des Befestigungselements 10 in einem Montagezustand bei der Verbindung zweier Werkstücke 12 und 14. Zur Ausbildung einer Verdrehsicherung kann der Schaftabschnitt 18 alternativ oder zusätzlich auch zumindest abschnittsweise in axialer Richtung verlaufende Vertiefungen oder Erhebungen aufweisen, beispielsweise zumindest eine Rille oder Rippe, welche sich beim Durchdringen des Ringabschnitts 16 in die innere Wandung der Öffnung 20 und/oder in eines der Werkstücke 12 und 14 eingräbt.

Das Befestigungselement 10 wird, wie in den Fig. 2 bis 4 gezeigt ist, mittels einer ersten Setzeinrichtung 44 in das erste Werkstück 12 eingestanzt. Dazu wird das vorstehend beschriebene Befestigungselement 10 entlang einer Einstanzrichtung E parallel zur Längsachse L des Befestigungselements gemäß Fig. 2 an das erste Werkstück herangeführt. Die erste Setzeinrichtung 44 umfasst eine Matrize 46 mit einer Durchgangsöffnung 48 und einen Stempel 50 mit einer Kontaktfläche 52, die mit der Angriffsfläche 22 des Ringabschnitts 16 des Befestigungselements 10 in Eingriff bringbar ist. Zur Aufnahme des Schaftabschnitts 18 weist der Stempel 50 eine Aussparung 54 auf, sodass eine durch den Stempel 50 ausgeübte Einstanzkraft lediglich auf den Ringabschnitt 16, nicht jedoch auf den Schaftabschnitt 18 wirkt.

Das erste Werkstück 12 ist im gezeigten Ausführungsbeispiel ein Metallblech und konkret aus einem hochfesten Stahl gefertigt. Um die benötigte Einstanzkraft zu reduzieren und um die Initiierung von Mikrorissen in dem hochfesten ersten Werkstück 12 beim Einstanzen des Befestigungselements 10 zu vermeiden oder zumindest zu minimieren, ist das erste Werkstück 12 zumindest in einem Einstanzbereich auf eine Blechtemperatur von ca. 730°C aufgeheizt. Insbesondere kann der Aufheizvorgang im Rahmen eines Presshärteverfahrens erfolgen. Dabei kann das erste Werkstück beispielsweise auf eine Temperatur von etwa 1030°C erhitzt werden und anschließend, bei einer Werkstücktemperatur von etwa 730°C, das Befestigungselement 10 in das erste Werkstück 12 eingesetzt werden. Auf diese Weise kann ein Befestigungselement 10 in das hochfeste erste Werkstück 12 eingebracht werden, das selbst nicht aus einem hochfesten Material gefertigt ist, sondern beispielsweise ein einfaches Stahlteil ist. Die Temperatur, mit der das erste Werkstück 12 vorgewärmt wird, kann an dessen Materialeigenschaften angepasst werden. Das erste Werkstück 12 kann seine gewünschten hochfesten Materialeigenschaften beispielsweise also nach dem Warmumformverfahren und dem Einstanzen des Befestigungselements 10 erreichen.

Zum Einstanzen in das erhitzte erste Werkstück 12 wird das Befestigungselement 10 durch eine aufeinander zu gerichtete Relativbewegung von Stempel 50 und Matrize 46 mit der Werkstückanlagefläche 24 voran entlang der Einstanzrichtung E mit dem ersten Werkstück 12 in Kontakt gebracht, wodurch zuerst die Erhebung 28 der Werkstückanlagefläche 24 mit dem ersten Werkstück 12 in Kontakt gerät. Die Erhebung 28 verbiegt durch die aufgebrachte Einstanzkraft das erste Werkstück bereits in Einstanzrichtung und erzeugt somit eine Spannung in dem Metallblech. Schließlich gerät bei fortgesetzter Einstanzbewegung die Stanzkante 26 mit dem vorgespannten Werkstückabschnitt 56 in Kontakt, sodass das erste Werkstück 12 im Bereich der Stanzkante 26 unter Erzeugung eines Stanzbutzens 58 durchtrennt wird und der Ringabschnitt 16 des Befestigungselements 10 in das erhitzte erste Werkstück 12 eingestanzt wird (siehe Fig. 3). Der Stanzbutzen 58 wird durch die Durchgangsöffnung 48 der Matrize entsorgt, wobei die Erhebung 28 der Werkstückanlagefläche 24 als Verdrängerstruktur zum zuverlässigen Ausstoßen des Stanzbutzens 58 beiträgt.

Fig. 4 zeigt das resultierende erste Zusammenbauteil 60, welches das erste Werkstück 12 umfasst, in das der Ringabschnitt 16 des Befestigungselements 10 eingestanzt ist. Die dem Befestigungselement 10 vor dem Einstanzen abgewandte Oberfläche 62 des ersten Werkstücks 12, also gemäß Fig. 4 die untere Oberfläche 62 des ersten Werkstücks 12, ist mit der angrenzenden Werkstückanlagefläche 24 des in das erste Werkstück 12 eingestanzten Befestigungselements 10 bündig ausgerichtet.

Das erste Zusammenbauteil 60 wird aus der ersten Setzeinrichtung 44 entnommen und auf die Umgebungstemperatur abgekühlt, beispielsweise auf etwa 20°C. Beim Abkühlen zieht sich das erste Werkstück 12 zusammen, sodass das Werkstück 12 eine Klemmwirkung auf das Befestigungselement 10 ausübt und die Verbindung des Ringabschnitts 16 mit dem ersten Werkstück 12 zusätzlich verbessert wird.

Im weiteren Verfahren wird das erste Werkstück 12 des ersten Zusammenbauteils 60 mit dem bereitgestellten zweiten Werkstück 14 mittels einer zweiten Setzeinrichtung 64 verbunden, wie es in Fig. 5 bis 8 gezeigt ist. Das zweite Werkstück 14 ist in dem gezeigten Ausführungsbeispiel ebenfalls ein aus Metall gefertigtes Blechteil (z.B. ein Aluminiumblech). Das Material des ersten Werkstücks 12 weist also eine höhere Festigkeit auf, als das Material des zweiten Werkstücks 14, insbesondere kann es sich bei dem ersten Werkstück 14 auch um ein Kunststoffteil handeln. Das zweite Werkstück 14 ist bevorzugt aus einem duktilen Material, so dass es in geeigneter Weise verformbar ist (siehe unten). Grundsätzlich ist auch denkbar, dass das zweite Werkstück 14 aus einem Kunststoff gefertigt ist.

Die zweite Setzeinrichtung 64 ist in Fig. 5 gezeigt und umfasst eine zweite Matrize 66 mit einer kreisrunden zweiten Durchgangsöffnung 68 und einer um die zweite Durchgangsöffnung 68 herum angeordnete Auflagefläche 70 für das zweite Werkstück 14. Um die zweite Durchgangsöffnung 68 herum ist eine ringförmige Matrizenerhebung 72 angeordnet, die aus der Auflagefläche 70 herausragt und die über einen konischen Bereich 74 in die zweite Durchgangsöffnung 68 übergeht.

Die zweite Setzeinrichtung umfasst weiterhin einen zweiten Stempel 76, der einen ersten Kontaktbereich 78 und einen zweiten Kontaktereich 80 umfasst, wobei der erste Kontaktbereich 78 mit einer zweiten Angriffsfläche 79 auf dem radial erweiterten Kopfabschnitt 40 des Schaftabschnitts 18 und der zweite Kontaktbereich 80 mit der Angriffsfläche 22 in Eingriff ist. Ferner umfasst die zweite Setzeinrichtung 64 einen Niederhalter 82 zum Fixieren des ersten Zusammenbauteils 60.

Fig. 5 zeigt, wie das zweite Werkstück 14 zum Verbinden mit dem ersten Zusammenbauteil 60 auf der Auflagefläche 70 der zweiten Matrize und insbesondere auf der daraus herausragenden Matrizenerhebung 72 bereitgestellt wird. Das erste Zusammenbauteil 60 wird derart in der zweiten Setzeinrichtung 64 positioniert, dass die Werkstückanlagefläche 24 des Ringabschnitts 16 und insbesondere die Erhebung 28 der Werkstückanlagefläche 24 an dem zweiten Werkstück 14 anliegen. Das zweite Werkstück 14 ist zu Beginn des zweiten Setzvorgangs also zwischen der Erhebung 28 der Werkstückanlagefläche 24 und der Matrizenerhebung 72 eingespannt, wobei das zweite Werkstück 14 außerhalb des Bereichs der Erhebungen 28 und 72 sowohl von dem ersten Werkstück 12 als auch von der Auflagefläche 70 beabstandet angeordnet ist.

Die zweite Setzeinrichtung 64 wirkt wie die erste Setzeinrichtung 44 koaxial zu der Längsachse L auf das Befestigungselement 10. Der Niederhalter 82 fixiert diese Anordnung. Der zweite Stempel 76 steht zunächst mittels des ersten Kontaktbereichs 78 nur mit der zweiten Angriffsfläche 79 des Schaftabschnitts 18 in Eingriff, sodass eine durch die zweite Setzeinrichtung 64 erzeugte Einstanzkraft lediglich auf den Schaftabschnitt 18 wirkt, nicht aber auf den Ringabschnitt 16. Ein aktives Erwärmen des zweiten Werkstücks 14 ist nicht vorgesehen.

Fig. 6 zeigt, wie das Befestigungselement 10 zur Verbindung des ersten und des zweiten Werkstücks 12, 14 in der Einstanzrichtung E durch eine aufeinander zu gerichtete Relativbewegung von dem zweiten Stempel 76 und der zweiten Matrize 66 mit einer Einstanzkraft beaufschlagt wird. Diese bewirkt eine Trennung des Schaftabschnitts 18 und des Ringabschnitts 16 an der Sollbruchstelle des Koppelabschnitts 34, sodass der Schaftabschnitt 18 anschließend entlang der Einstanzrichtung E durch die Öffnung 20 des Ringabschnitts 16 geführt wird. Im Verlauf des Einpressens wird der Schaftabschnitt 18 mit seinem dem radial erweiterten Kopfabschnitt 40 abgewandten Ende auf das zweite Werkstück 14 gepresst, wobei ein Stanzbutzen 82 mittels einer durch die Trennung der Kopplung entstandenen zweiten Stanzkante 83 des Schaftabschnitts 18 aus dem Aluminiumblech des zweiten Werkstücks 14 gestanzt wird, der durch die zweite Durchgangsöffnung 68 der zweiten Matrize 66 ausgestoßen wird.

Der Schaftabschnitt 18 wird anschließend weiter durch die Öffnung 20 des Ringabschnitts 16 gepresst, bis er die gewünschte Endlage relativ zu dem Ringabschnitt 16 erreicht hat. Im gezeigten Ausführungsbeispiel ist diese Endlage dann erreicht, wenn der radial erweiterte Kopfabschnitt 40 des Schaftabschnitts 18 durch die Relativbewegung von Stempel 76 und Matrize 66 der zweiten Setzeinrichtung 64 mit der Angriffsfläche 22 des Ringabschnitts 16 in Anlage gebracht wurde.

In diesem Moment gelangt der Stempel 76 mit seinem zweiten Kontaktbereich 80 ebenfalls in Eingriff mit der Angriffsfläche 22, sodass die Einstanzkraft der zweiten Setzeinrichtung 64 bei dem weiteren Einpressen über die Angriffsfläche 22 auch auf den Ringabschnitt 16 wirkt und diesen entlang der Einstanzrichtung E gegen das zweite Werkstück 14 presst, während die Relativposition von Schaftabschnitt 18 und Ringabschnitt 16 konstant bleibt, da der zweite Stempel 76 über den ersten Kontaktbereich 78 weiterhin auch den Schaftabschnitt 18 mit der Einstanzkraft beaufschlagt. Der Schaftabschnitt 18 ist zu diesem Zeitpunkt bereits derart in der Öffnung 20 des Ringabschnitts 16 angeordnet, dass ein Ende des Schaftabschnitts 18 in das zweite Werkstück 14 hineinragt oder, wie im gezeigten Ausführungsbeispiel gemäß Fig. 6 und 7, durch das zweite Werkstück 14 hindurchragt.

Sobald der Stempel 76 auch den Ringabschnitt 16 mit der Einstanzkraft beaufschlagt, wird einerseits die Werkstückanlagefläche 24 des Ringabschnitts 16 an das daran anliegende zweite Werkstück 14 gepresst, während andererseits das zweite Werkstück 14 gegen die Auflagefläche 70 der zweiten Matrize 66 und die Matrizenerhebung 72 gepresst wird. Durch die Wirkung der Matrizenerhebung 72 und die gewissermaßen als Gegenmatrize wirkende Erhebung 28 der Werkstückanlagefläche 24 des Ringabschnitts 16 wird Material des zweiten Werkstücks 14 in die an der radialen Außenseite des Schaftabschnitts 18 angeordneten Vertiefungen 42 gepresst, da es aus einem zwischen der Erhebung 28 und der Matrizenerhebung 72 gelegenen Verjüngungsbereich 84 des zweiten Werkstücks 14 verdrängt wird. Auf der dem Ringabschnitt 16 abgewandten unteren Oberfläche 85 des zweiten Werkstücks 14 entsteht so eine mit der Matrizenerhebung 72 korrespondierende Vertiefung 86, die ringförmig ausgebildet ist und die sich um den durch das zweite Werkstück 14 hindurch ragenden Schaftabschnitt 18 erstreckt. Weiterhin wird Material des zweiten Werkstücks 14 auch in die konisch zulaufenden Bereiche des Übergangskonus 30 des Ringelements 16 einerseits und des konischen Bereichs 74 der zweiten Matrize 66 andererseits gedrängt.

Auf diese Weise wird eine in Fig. 8 gezeigte wirksame, auszugssichere Verbindung zwischen dem ersten und dem zweiten Werkstück 12, 14 sowie dem Befestigungselement 10 erzeugt, wobei das erste und das zweite Werkstück 12 und 14 nach dem Einstanzvorgang in der zweiten Setzeinrichtung 64 mit der unteren Oberfläche 62 des ersten Werkstücks 12 und einer oberen Oberfläche 87 des zweiten Werkstücks 14 aneinander anliegen. Das Befestigungselement 10 des hier gezeigten Ausführungsbeispiels kann für erste und zweite Werkstücke 12 und 14 mit verschiedenen Blechdicken eingesetzt werden.

Das dem Kopfabschnitt 40 abgewandte Ende des Schaftabschnitts 18, das aus dem zweiten Werkstück 14 herausragt, kann bei Bedarf radial aufgeweitet werden, um einen Hinterschnitt zu erzeugen, der die Verbindung noch zuverlässiger macht.

### Bezugszeichenliste

- 10: Befestigungselement
- 12: erstes Werkstück
- 14: zweites Werkstück
- 16: Ringabschnitt
- 18: Schaftabschnitt
- 20: Öffnung
- 22: Angriffsfläche
- 24: Werkstückanlagefläche
- 26: Stanzkante
- 28: Erhebung
- 30: Übergangskonus
- 32: radiale Außenfläche des Ringabschnitts 16
- 34: Koppelabschnitt
- 36: Außenkontur des Schaftabschnitts
- 38: Innenkontur der Öffnung 20
- 40: radial erweiterter Kopfabschnitt
- 42: nutartige Vertiefungen des Schaftabschnitts
- 44: erste Setzeinrichtung
- 46: Matrize
- 48: Durchgangsöffnung
- 50: Stempel
- 52: Kontaktfläche
- 54: Aussparung
- 56: vorgespannter Werkstückabschnitt
- 58: Stanzbutzen
- 60: Zusammenbauteil
- 62: untere Oberfläche des ersten Werkstücks 12
- 64: zweite Setzeinrichtung
- 66: zweite Matrize
- 68: zweite Durchgangsöffnung
- 70: Auflagefläche
- 72: Matrizenerhebung
- 74: konischer Bereich
- 76: zweiter Stempel
- 78: erster Kontaktbereich
- 79: zweite Angriffsfläche
- 80: zweiter Kontaktbereich
- 82: zweiter Stanzbutzen
- 83: zweite Stanzkante
- 84: Verjügungsbereich
- 85: unteren Oberfläche 85 des zweiten Werkstücks 14
- 86: mit der Matrizenerhebung 72 korrespondierende Vertiefung 86
- 87: obere Oberfläche des zweiten Werkstücks 14

- L: Längsachse
- A_{S}: axiale Erstreckung des Schaftabschnitts 18
- A_{R}: axiale Erstreckung des Ringabschnitts 16
- E: Einstanzrichtung

## Patentansprüche

1. Selbststanzendes Befestigungselement (10) zur Verbindung eines ersten Werkstücks (12) mit einem zweiten Werkstück (14), insbesondere wobei die Werkstücke (12, 14) Blechteile sind, umfassend:
einen Ringabschnitt (16), der eine Öffnung (20) des Befestigungselements (10) in Umfangsrichtung umgibt und der eine Werkstückanlagefläche (24), die radial außenseitig von einer Stanzkante (26) begrenzt ist, und eine Angriffsfläche (22) für eine erste Setzeinrichtung (44) aufweist, die an der der Werkstückanlagefläche (24) abgewandten Seite des Ringabschnitts (16) angeordnet ist, und
einen mit dem Ringabschnitt (16) mittels eines Koppelabschnitts (34) verbundenen und mit der Öffnung (20) koaxial angeordneten Schaftabschnitt (18), der sich von der der Werkstückanlagefläche (24) abgewandten Seite des Ringabschnitts (16) erstreckt und der eine Außenkontur (36) aufweist, die komplementär zu einer Innenkontur (38) der Öffnung (20) ausgestaltet ist, so dass der Schaftabschnitt (18) nach einer Trennung der Verbindung mit dem Ringabschnitt (16) zumindest teilweise durch die Öffnung (20) führbar ist, wobei eine axiale Erstreckung (As) des Schaftabschnitts (18) größer ist als eine axiale Erstreckung (A_{R}) des Ringabschnitts (16), insbesondere wobei eine radiale Außenfläche (32) des Ringabschnitts (16) zumindest ein Verdrehsicherungsmerkmal aufweist, insbesondere zumindest eine Vertiefung und/oder zumindest eine Erhebung.

2. Selbststanzendes Befestigungselement (10) nach Anspruch 1,
wobei die Werkstückanlagefläche (24) abschnittsweise mit einer Erhebung (28) versehen ist, die insbesondere ringförmig ausgestaltet ist und/oder die in einem der Öffnung (20) benachbarten oder an diese angrenzenden, radial innen liegenden Bereich der Werkstückanlagefläche (24) angeordnet ist.

3. Selbststanzendes Befestigungselement (10) nach einem der vorstehenden Ansprüche,
wobei der Schaftabschnitt (18) an seiner radialen Außenseite zumindest eine Vertiefung (42) aufweist, die zumindest abschnittsweise in Umfangsrichtung verläuft, insbesondere wobei die Vertiefung (42) eine in Umfangsrichtung verlaufende Nut ist und/oder wobei der Schaftabschnitt (18) an seiner radialen Außenseite zumindest eine Erhebung aufweist, die zumindest abschnittsweise in axialer Richtung verläuft, insbesondere wobei die Erhebung eine in axialer Richtung verlaufende Rippe ist.

4. Selbststanzendes Befestigungselement (10) nach einem der vorstehenden Ansprüche,
wobei der Schaftabschnitt (18) an seinem dem Ringabschnitt (16) abgewandten Ende einen radial erweiterten Kopfabschnitt (40) aufweist, der die Innenkontur (38) der Öffnung (20) in radialer Richtung zumindest abschnittsweise überragt.

5. Selbststanzendes Befestigungselement (10) nach einem der vorstehenden Ansprüche,
wobei ein Grundkörper des Schaftabschnitts (18) eine im Wesentlichen zylindrische Form aufweist und wobei die Öffnung (20) im Wesentlichen kreisförmig ist.

6. Selbststanzendes Befestigungselement (10) nach einem der vorstehenden Ansprüche,
wobei der Koppelabschnitt (34) derart ausgestaltet ist, dass zwischen dem Schaftabschnitt (18) und dem Ringabschnitt (16) ein Reibschluss, ein Stoffschluss und/oder ein Formschluss hergestellt ist.

7. Selbststanzendes Befestigungselement (10) nach einem der vorstehenden Ansprüche,
wobei der Schaftabschnitt (18) und der Ringabschnitt (16) einstückig ausgebildet sind.

8. Zusammenbauteil (60) umfassend ein erstes Werkstück (12), in das der Ringabschnitt (16) eines Befestigungselements (10) gemäß zumindest einem der vorstehenden Ansprüche eingestanzt ist, insbesondere wobei eine dem Befestigungselement (10) vordem Einstanzen abgewandte Oberfläche (62) des ersten Werkstücks (12) in einem Bereich benachbart zu oder angrenzend an eine durch das Einstanzen erzeugte Öffnung in dem ersten Werkstück (12) im Wesentlichen bündig mit der Werkstückanlagefläche (24) angeordnet ist.

9. Zusammenbauteil (60) nach Anspruch 8,
ferner umfassend ein zweites Werkstück (14), das an der Werkstückanlagefläche (24) anliegt, wobei die durch den Koppelabschnitt (34) bereitgestellte Verbindung des Schaftabschnitts (18) und des Ringabschnitts (16) getrennt ist und der Schaftabschnitt (18) derart in der Öffnung (20) des Ringabschnitts (16) angeordnet ist, dass ein Ende des Schaftabschnitts (18) in das zweite Werkstück (14) ragt oder durch das zweite Werkstück (14) hindurch ragt, insbesondere wobei eine dem Ringabschnitt (16) abgewandte Oberfläche (85) des zweiten Werkstücks (14) eine Vertiefung (86), insbesondere ringförmige Vertiefung aufweist, die radial außerhalb und benachbart zu dem in das zweite Werkstück (14) ragenden oder durch das zweite Werkstück (14) hindurch ragenden Ende des Schaftabschnitts (18) angeordnet ist.

10. Zusammenbauteil (60) nach Anspruch 9,
wobei Material des zweiten Werkstücks (14) in zumindest eine Vertiefung (42) gedrängt ist, die an einer radialen Außenseite des Schaftabschnitts (18) angeordnet ist.

11. Zusammenbauteil (60) nach einem der Ansprüche 8 bis 10,
wobei das Material des ersten Werkstücks (12) zumindest in einem Bereich um das Befestigungselement (10) fester als das Material des zweiten Werkstücks (14) ist, insbesondere wobei das erste Werkstück (12) in diesem Bereich Stahl, bevorzugt hochfesten Stahl umfasst und das zweite Werkstück (14) in diesem Bereich Aluminium umfasst.

12. Verfahren zur Herstellung eines Zusammenbauteils (60) gemäß einem der Ansprüche 8 bis 11, mit den Schritten:
Bereitstellen eines ersten Werkstücks (12),
Einstanzen des Ringabschnitts (16) eines Befestigungselements (10) gemäß zumindest eines der Ansprüche 1 bis 7 unter Erzeugung eines Stanzbutzens (58) in das erste Werkstück (12), wobei bei dem Einstanzen eine erste Setzeinrichtung (44) auf die Angriffsfläche (22) des Ringabschnitts (16) wirkt, insbesondere wobei das Einstanzen bei einem oder anschließend an ein Presshärten des ersten Werkstücks erfolgt und/oder insbesondere wobei das erste Werkstück (12) vor dem Einstanzen des Befestigungselements (10) zumindest lokal erwärmt wird, insbesondere auf eine Temperatur von über 500°C, über 600°C, über 700°C, über 800°C, über 900°C oder über 1000°C.

13. Verfahren nach Anspruch 12,
wobei nach den Schritten gemäß Anspruch 18 oder 19 ein zweites Werkstück (14) derart bereitgestellt wird, dass es in Anlage mit der Werkstückanlagefläche (24) des Ringabschnitts (16) des Zusammenbauteils (60) gemäß einem der Ansprüche 12 bis 17 ist, und wobei der Schaftabschnitt (18) anschließend mittels einer zweiten Setzeinrichtung (64) durch die Öffnung (20) des Ringabschnitts (16) und gegen das zweite Werkstück (14) gepresst wird, so dass ein Ende des Schaftabschnitts (18) in das zweite Werkstück (14) ragt oder durch das zweite Werkstück (14) hindurch ragt, insbesondere wobei das zweite Werkstück (14) nicht erwärmt wird.

14. Verfahren nach Anspruch 13,
wobei bei dem Einpressen des Schaftabschnitts (18) ein Stanzbutzen (82) aus dem zweiten Werkstück (14) ausgestanzt wird.

15. Verfahren nach Anspruch 13 oder 14,
wobei die zweite Setzeinrichtung (64) zunächst auf den Schaftabschnitt (18) wirkt, um diesen gegen das zweite Werkstück (14) zu pressen, bis der Schaftabschnitt (18) eine gewünschte Endlage erreicht hat, und wobei die zweite Setzeinrichtung (64) anschließend auf den Ringabschnitt (16) wirkt, insbesondere über die Angriffsfläche (22), um den Ringabschnitt (16) gegen das zweite Werkstück (14) zu pressen, und/oder wobei das zweite Werkstück (14) bei dem Einpressen des Schaftabschnitts (18) auf einer Matrize (66) aufliegt, die eine aus einer Auflagefläche (70) für das zweite Werkstück (14) ragende Erhebung (72) aufweist, die eine radiale Innenkontur aufweist, die in radialer Richtung außerhalb der Außenkontur (36) des Schaftabschnitts (18) liegt, insbesondere wobei durch die Matrize (66) Material des zweiten Werkstücks (14) in zumindest eine Vertiefung (42) gedrängt wird, die an einer radialen Außenseite des Schaftabschnitts (18) angeordnet ist, wobei insbesondere eine Erhebung (28) der Werkstückanlagefläche (24) als Gegenmatrize wirkt, um Material des zweiten Werkstücks (14) in die zumindest eine Vertiefung (42) zu drängen, die an der radialen Außenseite des Schaftabschnitts (18) angeordnet ist.
